# EUROPEAN PATENT APPLICATION

(11) **EP 4 796 494 A1**
(43) Date of publication of application: **26.08.2026**
(21) Application number: 25159503.9
(22) Date of filing: 21.02.2025
(51) Int. Cl.: C01B 3/04, C07C 29/151, B01D 53/14

(54) **NH3 CRACKING PROCESS WITH PRIMARY FUEL AND FLUE GAS CO2 CAPTURE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Junger, Jasmin, 60439 Frankfurt am Main (DE); Freires Baena, Thomas Mitchel, 60439 Frankfurt am Main (DE); Schmidt, Sophia, 60439 Frankfurt am Main (DE); Prost, Laurent, 60439 Frankfurt am Main (DE); Gupta, Ankit, 60439 Frankfurt am Main (DE); Knoedl, Dominik, 60439 Frankfurt am Main (DE)
(74) Representative: Air Liquide

(57) **Abstract**

Process of ammonia cracking, comprising the following steps :
- providing an ammonia feed stream,
- passing at least part of the ammonia feed stream, or a gas derived from the ammonia feed stream, to a cracker unit for performing an ammonia cracking reaction,
- providing a primary fuel and performing a combustion of said primary fuel thus generating heat and a flue gas comprising carbon dioxide,
- providing heat from said combustion to the ammonia cracking reaction,
- passing at least a portion of the flue gas to a carbon dioxide recovery unit for recovering a carbon dioxide enriched stream from the flue gas,
wherein a cracked gas comprising hydrogen, nitrogen and optionally unconverted ammonia is obtained through the ammonia cracking reaction.

## Description

The present invention relates to a process of ammonia cracking and to an apparatus for performing an ammonia cracking reaction.

In an effort to reduce the effects of carbon dioxide emissions, new energy carriers are becoming increasingly more important. One of the leading energy carriers is hydrogen; however, due to its small molecular size, high-pressure requirements, and very low boiling point, transportation of hydrogen is difficult and costly.

In order to provide green energy, reducing carbon footprints of industrial units is becoming increasingly important. Moreover, as hydrogen is quickly becoming the preferred sustainable fuel of the future due to its potential for zero carbon emissions, production of hydrogen in an environmentally sensitive manner is becoming increasingly more important.

As an alternative to CO2 capture of existing hydrogen production facilities, it is possible to use a decarbonized feedstock such as ammonia (NH3) for H2 production. Ammonia can be cracked into a cracked gas comprising hydrogen and nitrogen, at elevated pressure and high temperatures (at a range between 700 and 800°C), in the presence of a catalyst. Hydrogen can be recovered using a pressure swing adsorption unit (PSA). By using ammonia as feedstock instead of CH4, the source of carbon is eliminated since the byproducts of these carbon-free feedstocks (for example the PSA tail gas) will not contain any carbon. Existing infrastructure can be used for storage and transportation of large ammonia inventories (e.g., LPG infrastructure). With such availability of carbon-free feedstock, there is an incentive to use the ammonia for both fueling and the process side of the ammonia cracking process.

The cost of ammonia however requires using complex equipment, such as a pre-cracker and/or a scrubbing unit to recover unconverted ammonia from the cracked gas, which comes with additional costs of the plant.

It has been proposed to use external hydrocarbon fuels instead of ammonia for the fueling of the ammonia cracking process. While this decreases the ammonia consumption of the plant, thus allowing a less costly design, it is often the case that the target on the maximum carbon intensity of the plant cannot be met with such fueling.

An approach was to mitigate the carbon intensity by having part of the fueling done through the recycling of the tail gas from the PSA to the combustion chamber, as it is generally known in the field of endothermic chemical processes. This however comes with an additional ammonia consumption, namely ammonia consumed for the fueling of the process instead of being valorized as sustainable fuel.

There is a need for an ammonia cracking scheme allowing more flexibility on the carbon intensity while still being economically competitive.

The invention proposes a process of ammonia cracking, comprising the following steps :
- providing an ammonia feed stream,
- passing at least part of the ammonia feed stream, or a gas derived from the ammonia feed stream, to a cracker unit for performing an ammonia cracking reaction,
- providing a primary fuel and performing a combustion of said primary fuel thus generating heat and a flue gas comprising carbon dioxide (CO2),
- providing heat from said combustion to the ammonia cracking reaction,
- passing at least part of the flue gas to a carbon dioxide recovery unit for recovering a carbon dioxide enriched stream (CO2-enriched stream) from the flue gas.

Instead of releasing the flue gas rich in carbon dioxide to the atmosphere, at least part of the CO2 it contains is recovered. The invention thus offers a new flexible way of reaching the carbon intensity target of an ammonia cracking process.

In one embodiment, the provided ammonia feed stream comprises at least 99 mol% of ammonia, in particular at least 99,5 mol% of ammonia, more particularly at least 99,7 mol% of ammonia.

In one embodiment, the carbon intensity of the process of ammonia cracking is varied by controlling the portion of the flue gas passed to the carbon dioxide recovery unit.

In one embodiment, the process is for the production of a renewable fuel, in particular a renewable fuel of non-biological origin (RFNBO). In particular, said portion of the flue gas passed to the carbon dioxide recovery unit is controlled such that the carbon intensity of the produced renewable fuel remains below a pre-determined value. Said pre-determined carbon intensity value may for example correspond to an RFNBO criteria.

In one embodiment, the flue gas comprises between 10 and 50 vol% of carbon dioxide on a dry basis, in particular between 15 and 50 vol% of carbon dioxide on a dry basis, more particularly between 20 and 50 vol% of carbon dioxide on a dry basis.

In one embodiment, passing at least part of the flue gas to a carbon dioxide recovery unit comprises recovering at least 90% of the carbon dioxide from the flue gas in said CO2-enriched stream, preferably recovering at least 95% of the carbon dioxide from the flue gas in said CO2-enriched stream, more preferably recovering at least 99% of the carbon dioxide from the flue gas in said CO2-enriched stream.

In one embodiment, the CO2-enriched stream comprises at least 90 mol% of carbon dioxide on a dry basis, preferably at least 94 mol% of carbon dioxide on a dry basis.

In one embodiment, the process comprises discharging, for example to the atmosphere, a carbon dioxide depleted flue gas (CO2-depleted flue gas) from which said carbon dioxide was recovered.

In one embodiment, said primary fuel is a hydrocarbon containing fuel, such as natural gas, methane or bio-methane, LPG or refinery offgas.

In one embodiment, said primary fuel is provided from a natural gas network, from an LPG infrastructure, or from a fuel gas network.

In one embodiment, the process comprises feeding the primary fuel to the cracker unit for performing said combustion. In particular, the cracker unit comprises a reaction section configured for performing said ammonia cracking reaction and a combustion chamber arranged in thermal communication with the reaction section for performing said combustion and provide heat to the ammonia cracking reaction and the process comprises feeding the primary fuel to the combustion chamber. Said reaction section comprises for example one or several catalyst filled tubes extending through the combustion chamber.

In one embodiment, a cracked gas comprising hydrogen, nitrogen and optionally unconverted ammonia is obtained through the ammonia cracking reaction.

In one embodiment, the process comprises a step of generating steam by cooling the cracked gas.

In one embodiment, the process comprises a step of generating steam by cooling the flue gas upstream the step of passing said at least part of the flue gas to the carbon dioxide recovery unit, in particular by cooling the flue gas discharged from the combustion chamber.

In one embodiment, the process comprises recovering the unconverted ammonia from the cracked gas by scrubbing, thus obtaining an ammonia depleted gas. The process may comprise recycling the recovered ammonia to the cracker unit. In particular, said scrubbing generates an ammonia-containing water. Said ammonia-containing water may be subjected to stripping or distillation to desorb ammonia from the ammonia-containing water.

In one embodiment, the process comprises a step of removing nitrogen oxides (NOx) by selective catalytic reduction (SCR) from the flue gas discharged from the combustion chamber.

In one embodiment, the process comprises a step of compressing the flue gas upstream the step of passing the flue gas to the carbon dioxide recovery unit.

In one embodiment, passing at least part of the flue gas to a carbon dioxide recovery unit comprises absorbing carbon dioxide from the flue gas, in particular by means of an absorption medium, for example a chemically acting absorption medium, thus obtaining a carbon dioxide laden absorption medium. The absorption medium comprises typically an amine, a mixture of amines or consists of an amine or a mixture of amines. Such absorption medium preferably comprises primary amines, for example monoethanolamine (MEA), aminomethyl-propanol (AMP), secondary amines, for example diethanolamine (DEA), ethylenediamine (EDA), diisopropanolamine (DIPA), piperazine (PZ), butylethanolamine (BEA), tertiary amines for example methyldiethanolamine (MDEA), activated methyldiethanolamine (aMDEA),3-Dimetyl-1-Aminomethypropanol (3DMA1P), triethy-lendiamine (TEDA) diethylamino-2-butanol (DEAB), 3-(Diethylamino)propylamine (DEAPA); as well as proprietary amines from the commercial vendors. Such an absorption process is also referred to as amine wash. Usually, the flue gas is brought into contact with the absorption medium in countercurrent flow, whereby carbon dioxide is absorbed by the absorption medium. Further components from the flue gas stream may be absorbed by means of the absorption medium, in particular further sour gases, such as hydrogen sulfide. The amine wash unit may comprise additional equipment such as a reclaimer or a water scrubbing step after the CO2 absorption, to recover solvent from the flue gas.

In one embodiment, the provided ammonia is derived from a source of renewable hydrogen. Said renewable hydrogen is in particular produced using renewable electricity, for example by electrolysis.

In one embodiment, said ammonia feed stream is provided in a liquid form and vaporized. The process comprises in particular passing the vaporized ammonia feed stream to the cracker unit or to the pre-cracking reaction. The ammonia feed stream is in particular provided in a liquid form, pumped, vaporized and the process comprises passing the vaporized ammonia feed stream to the cracker unit or to the pre-cracking reaction.

In one embodiment, the recovered CO2-enriched stream is liquefied, in particular compressed and liquefied. This enables a simplified transport of the recovered carbon dioxide in view of its storage or valorization. In particular, the recovered CO2-enriched stream is liquefied by heat exchange with at least part of the ammonia feed stream provided in a liquid form.

In one embodiment, the absorption medium comprises ammonia, for example the absorption medium comprises an aqueous ammonia solution. The absorption medium may comprise ammonia derived from the provided ammonia feed stream, for example the absorption medium comprises an aqueous ammonia solution derived from the provided ammonia feed stream. In particular, the absorption medium comprises said ammonia-containing water. The ammonia-containing water from the scrubbing may in particular be used at least partially in the carbon dioxide recovery unit to replace any losses of the absorption medium. Additional cooling of the absorption medium can be accomplished by the direct addition of ammonia provided in a liquid form into the absorption medium or via indirect heat exchange.

In one embodiment, the process comprises passing the carbon dioxide laden absorption medium to a desorption unit for desorbing carbon dioxide from the carbon dioxide laden absorption medium thus obtaining a regenerated absorption medium. In particular, carbon dioxide is thermally desorbed from the carbon dioxide laden absorption medium, for example by heating said carbon dioxide laden absorption medium by heat exchange with said generated steam, with the cracked gas, with at least part of the flue discharged from the combustion chamber, or any combination thereof. The generated steam may for instance be introduced into the absorption medium to enable or enhance the desorption process and/or the absorption medium exchanges heat with said generated steam or with the cracked gas in a reboiler heat exchanger to enable the desorption process. The regenerated absorption medium may be recycled for absorbing carbon dioxide from the flue gas.

Said CO2-enriched stream may be derived from the step of passing the carbon dioxide laden absorption medium to a desorption unit.

In one embodiment, passing at least part of the flue gas to a carbon dioxide recovery unit comprises passing said at least part of the flue gas through a quench column, for cooling said at least part of the flue gas, in particular for the direct contact cooling of said at least part of the flue gas, upstream the step of absorbing carbon dioxide from the flue gas.

In one embodiment, passing at least part of the flue gas to a carbon dioxide recovery unit comprises recovering said CO2-enriched stream by cryogenics or adsorption or a combination thereof.

In one embodiment, the process comprises performing a pre-cracking reaction of the provided ammonia feed stream, in particular a pre-cracking reaction of the vaporized ammonia feed stream, for producing a partly converted ammonia feed and passing said partly converted ammonia feed to the cracker unit for performing said ammonia cracking reaction.

In one embodiment, the process comprises recovering a hydrogen enriched stream from the cracked gas or from a gas derived therefrom (for example from the ammonia depleted gas), thus producing an off gas comprising hydrogen and nitrogen. Said hydrogen is in particular recovered by an adsorption process, typically by a pressure swing adsorption process. Said hydrogen enriched stream is in particular recovered as said renewable fuel produced.

In one embodiment, the process comprises recycling the off gas, or a gas derived from the off gas, as a secondary fuel to the combustion. Other options for secondary fuel may comprise cracked gas, hydrogen enriched stream, or unconverted ammonia recovered from the ammonia recovery step e.g. water scrubber. There may be as well no secondary fuel used for performing the combustion. In particular, the provided ammonia feed stream has a heating value and the process comprises a step of controlling the heating value (for example the lower heating value) from the ammonia feed stream used for performing said combustion through said recycling of the off gas to the combustion, such that said heating value from the ammonia feed stream remains below a pre-determined value. Controlling said heating value from the ammonia feed stream comprises in particular controlling the adsorption process. Controlling said heating value from the ammonia feed stream comprises more particularly controlling an amount of hydrogen recovered from the cracked gas, thus controlling an amount of hydrogen sent to the combustion through the off gas.

The invention proposes also an apparatus comprising a cracker unit, said cracker unit comprising :
- a reaction section configured for performing an ammonia cracking reaction,
- a combustion chamber arranged in thermal communication with the reaction section for performing a combustion and provide heat to the ammonia cracking reaction,
the apparatus comprising a carbon dioxide recovery unit and a flue gas conduit connecting the combustion chamber to the carbon dioxide recovery unit for passing a flue gas discharged from the combustion chamber to the carbon dioxide recovery unit and recover a carbon dioxide enriched stream from the flue gas.

In one embodiment, the apparatus is configured for the production of a renewable fuel.

In one embodiment, the apparatus comprises a control system. In particular, the apparatus comprises a flow regulation device arranged to control a portion of said flue gas passed to the carbon dioxide recovery unit and the control system is configured for operating the flow regulation device to control the carbon intensity value of the produced renewable fuel. The flow regulation device comprises in particular at least one valve arranged in the flue gas conduit.

In one embodiment, the reaction section comprises one or several catalyst filled tubes extending through the combustion chamber.

In one embodiment, the apparatus comprises a pre-cracking reactor arranged for producing from ammonia a partly converted ammonia feed stream for the cracker unit.

In one embodiment, the apparatus comprises a cracked gas outlet arranged for discharging a cracked gas from the reaction section.

In one embodiment, the apparatus comprises a waste heat recovery section arranged for generating steam by recovering waste heat from the cracked gas and/or from the flue gas discharged from the combustion chamber.

In one embodiment, the apparatus comprises a scrubbing unit to recover unconverted ammonia from the cracked gas. Instead of a scrubbing unit, a flashing step or a condensation step or a combination thereof is possible to remove the unconverted ammonia from the cracked gas.

In one embodiment, the apparatus comprises a selective catalytic reduction unit (SCR unit) for removing nitrogen oxides from the flue gas discharged from the combustion chamber.

In one embodiment, the apparatus comprises one or more flue gas compressor(s) arranged for compressing the flue gas upstream the step of passing the flue gas to the carbon dioxide recovery unit.

In one embodiment, the apparatus comprises an ammonia conduit for the provision of an ammonia feed to the reaction section or to the pre-cracking reactor. The apparatus comprises in particular a vaporizer arranged for vaporizing said ammonia feed stream provided in a liquid form through the ammonia conduit and provide the vaporized ammonia to the reaction section or to the pre-cracking reactor. The apparatus comprises typically a pump arranged for pumping ammonia through the ammonia conduit.

In one embodiment, the apparatus comprises a carbon dioxide liquefier arranged for liquefying the recovered carbon dioxide enriched stream. The liquefier is in particular arranged for liquefying the recovered carbon dioxide enriched stream by heat exchange with said ammonia feed stream provided in a liquid form through the ammonia conduit. The apparatus may comprise a CO2 compressor upstream of the carbon dioxide liquefier for compressing the recovered carbon dioxide enriched stream upstream its liquefaction and potentially a drying unit like a molesieve, a Temperature Swing Adsorption (TSA) unit or glycol dehydration unit.

In one embodiment, the carbon dioxide recovery unit is an amine based carbon dioxide recovery unit. In particular, the carbon dioxide recovery unit comprises an absorption column configured for absorbing carbon dioxide from the flue gas by means of an absorption medium. The absorption column comprises in particular a packing material, such as a structured packing, arranged for increasing the internal surface area of the absorption column.

In one embodiment, the apparatus comprises a conduit for providing at least part of an ammonia-containing water from the scrubbing unit as at least part of the absorption medium to the absorption column.

In one embodiment, the absorption column comprises an outlet for discharging the absorption medium laden in the absorbed carbon dioxide.

In one embodiment, the carbon dioxide recovery unit comprises a desorption unit arranged for desorbing carbon dioxide from the absorption medium laden in the absorbed carbon dioxide. The desorption unit comprises in particular a desorption column. Desorbing carbon dioxide from the absorption medium laden in the absorbed carbon dioxide allows obtaining a regenerated absorption medium

In one embodiment, the desorption unit comprises a reboiler configured for thermally desorbing carbon dioxide from the absorption medium.

In one embodiment, the carbon dioxide recovery unit comprises an absorption medium recycle conduit for recycling said regenerated absorption medium to the absorption column.

In one embodiment, the reboiler comprises :
- an absorption medium circulation section arranged for the circulation of the absorption medium,
- a heating medium circulation section arranged in thermal communication with the absorption medium circulation section for the circulation of a heating medium and heating of the circulating absorption medium. In particular, the desorption column comprises a bottom part and the absorption medium circulation section is arranged for the circulation of the absorption medium from said bottom part of the desorption column.

In one embodiment, the apparatus comprises a conduit fluidically connecting the cracked gas outlet to the reboiler, in particular fluidically connecting the cracked gas outlet to the heating medium circulation section for providing the cracked gas as said heating medium to the heating medium circulation section.

In one embodiment, the apparatus comprises a conduit fluidically connecting the waste heat recovery section to the reboiler, in particular connecting the waste heat recovery section to the heating medium circulation section for providing said generated steam as said heating medium to the heating medium circulation section.

In one embodiment, the apparatus comprises a conduit fluidically connecting the waste heat recovery section to the desorption column.

In one embodiment, the flue gas conduit comprises the heating medium circulation section arranged for the heating of the circulating absorption medium by heat exchange with the flue gas discharged from the combustion chamber.

In one embodiment, the carbon dioxide recovery unit comprises a quench column arranged upstream the absorption column for cooling said at least part of the flue gas.

In one embodiment, the carbon dioxide recovery unit comprises a cryogenic carbon dioxide recovery section and/or an adsorptive carbon dioxide recovery section.

In one embodiment, the apparatus comprises a hydrogen recovery unit arranged for recovering hydrogen from the cracked gas or from the ammonia depleted gas. The hydrogen recovery unit is in particular, an adsorption unit, typically a pressure swing adsorption unit.

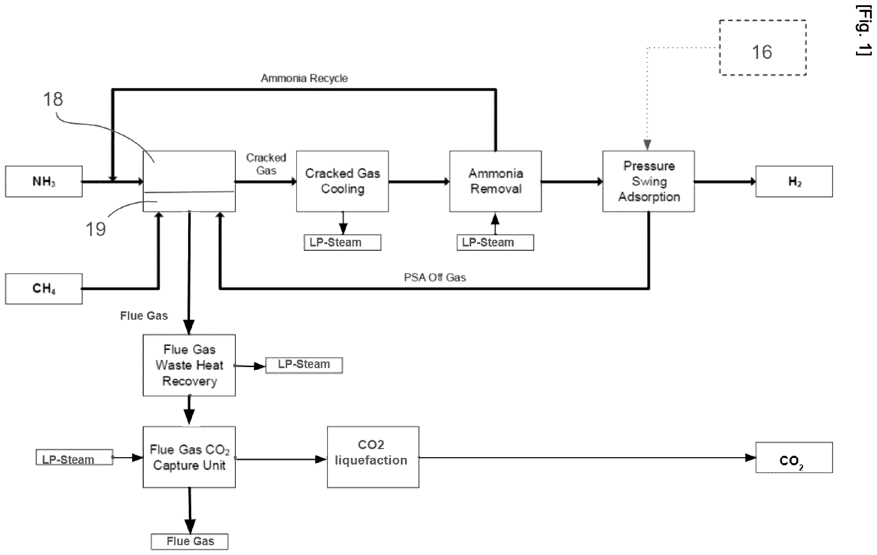

In one embodiment, the apparatus comprises an off gas recycle conduit connecting the hydrogen recovery unit to the combustion chamber for recycling an off gas produced by the hydrogen recovery unit, or a gas derived therefrom, to the combustion chamber. In particular, the control system is configured to control the hydrogen recovery unit such as control the heating value from the ammonia feed stream used for performing said combustion through said recycling of the off gas to the combustion chamber. The control system is more particularly configured to control the adsorption unit.
[1] Figure 1 depicts a first embodiment of the process according the invention.
Figure 2 depicts a second embodiment of the process according the invention.
Figure 3 depicts an apparatus according the invention in an embodiment corresponding to the first embodiment of the process.
Figure 4 depicts an apparatus according the invention in an embodiment corresponding to the second embodiment of the process.
Figure 5 depicts an apparatus according the invention in an alternative embodiment.

Referring to figure 1, a process for the production of hydrogen is shown. An ammonia feed stream (NH3) is provided and sent to the reaction section 18 of a cracker unit for performing an endothermic ammonia cracking reaction, thus obtaining a cracked gas. Methane is provided as a primary fuel to the combustion chamber 19 of the cracker unit and combusted for providing heat to the endothermic reaction. As a hydrocarbon fuel, the combustion of methane generates a combustion flue gas rich in carbon dioxide. Waste heat is recovered from the flue gas by generating low pressure steam (LP-steam), for example by passing the flue gas to a flue gas boiler 1. The thus cooled flue gas is passed to a carbon dioxide recovery unit (Flue gas CO2 capture unit) for capturing carbon dioxide instead of releasing it to the atmosphere. Thus, a renewable fuel of non-biological origin (RFNBO) credential, in particular regarding carbon intensity, can be met for the produced hydrogen.

Carbon intensity can be defined as the amount of carbon dioxide by weight emitted per unit of energy contained in the renewable fuel produced. Specifically, it is reported as gram (g) of carbon dioxide per mega Joule (MJ) of hydrogen (g CO2/MJ h), based on the lower heating value of the renewable fuel.

The cracked gas is passed through a cracked gas boiler for being cooled (Cracked gas cooling) by generating low pressure steam (LP-steam). Unconverted ammonia remaining in the cracked gas is recovered in a scrubbing unit and distillation column (represented schematically in the box "Ammonia Removal"). Part of the generated LP-steam may be used for the operation of said distillation column. The recovered ammonia is recycled to the ammonia cracking unit (Ammonia recycle).

The cracked gas boiler and the flue gas boiler 1 are part of a waste heat recovery section arranged for the recovery of waste heat from the cracked gas and/or from the flue gas by generating steam.

The ammonia depleted gas (from which unconverted ammonia was recovered) is sent to a pressure swing adsorption unit (pressure swing adsorption or PSA) for recovering a hydrogen enriched stream (H2) as said produced hydrogen. The PSA off gas is recycled to the combustion chamber 19 as a secondary fuel. The PSA off gas comprises nitrogen separated from the hydrogen enriched stream, but also some hydrogen that could not be separated, which contributes to the heating value of the off gas. This hydrogen remaining in the off gas originates from the cracking reaction of the ammonia feed. Thus, the recycling of the off gas to the combustion means that part of the heating value of the ammonia feed ends up being used for the heat input to the ammonia cracking reaction, instead of being valorized as heating value of the hydrogen produced as renewable fuel. Considering this, a controller 16 is arranged for regulating the pressure swing adsorption process, ensuring that the amounts of off gas generated and recycled to the combustion chamber 19 do not lead to a heating value of the ammonia feed used for performing the combustion exceeding a certain value. In a non-represented embodiment wherein the process comprises no ammonia removal from the cracked gas, the cooled cracked gas is sent directly to the pressure swing adsorption and the PSA off gas may comprise substantial amounts of unconverted ammonia. These amounts of unconverted ammonia recycled to the combustion chamber 19 also contribute to the heating value of the PSA off gas and thus to the part of the ammonia feed heating value used for the heat input to the ammonia cracking reaction.

The carbon dioxide recovery unit may need a heat input for its operation, as it will be detailed below in some exemplary embodiments. In the embodiment of figure 1, this heat input is ensured by providing LP-steam to the carbon dioxide recovery unit. A carbon dioxide depleted flue gas (CO2-depleted flue gas), from which most of the carbon dioxide was recovered, is released to the atmosphere. The recovered carbon dioxide is liquefied (CO2 liquefaction) for its transport and storage.

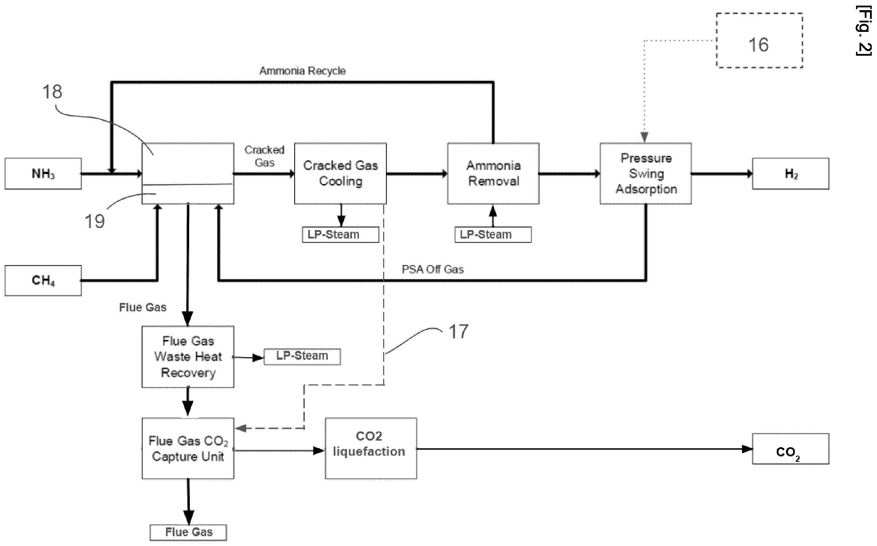

The embodiment of figure 2 differs from the embodiment of figure 1 in that heat is provided to the carbon dioxide recovery unit from the hot cracked gas discharged from the reaction section 18, thus contributing to the cooling of the cracked gas.

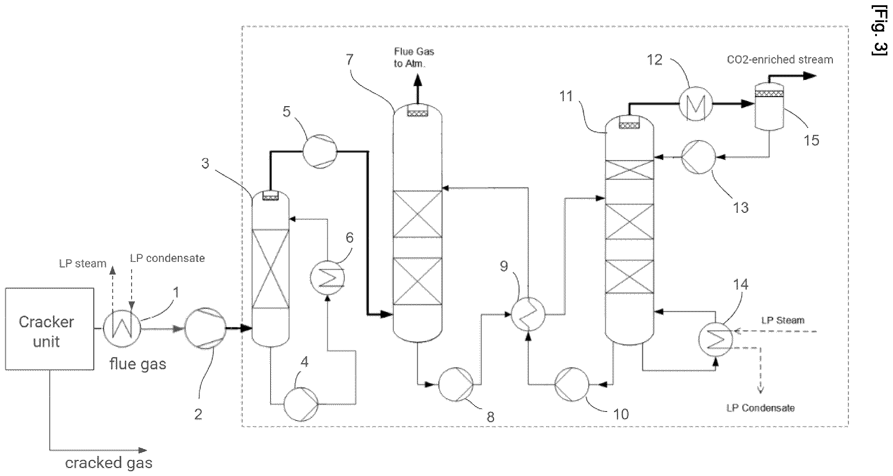

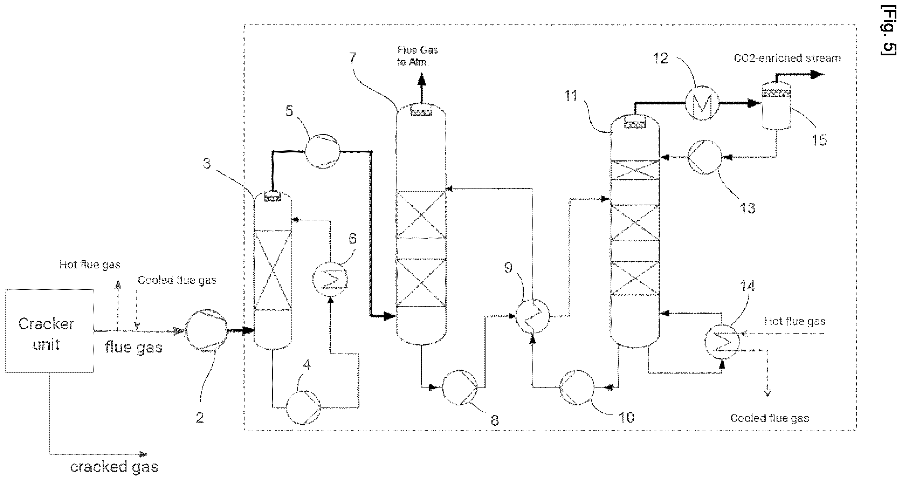

In the embodiments of figures 3, 4 and 5, the carbon dioxide recovery unit is an amine based unit. The cracker unit from which the cracked gas and the flue gas are discharged is represented merely schematically.

Referring to figure 3, the flue gas discharged from the combustion chamber 19 (not represented) is passed to a flue gas boiler 1 for cooling. A condensate (LP condensate) is returned to the flue gas boiler 1 for being vaporized as LP-steam, thus cooling the flue gas. The cooled flue gas is compressed in a compressor 2 and passed to a quench column 3 for further cooling. A packing is arranged in the quench column 3 to enhance the heat transfers. A cooling medium is recirculated from the bottom of the quench column 3 by means of a pump 4 and cooled through a heat exchanger 6. The thus further cooled flue gas exits through the top of the quench column 3 and is compressed in a compressor 5 to overcome pressure drop in the following absorption column 7.

The cooled and compressed flue gas is passed to an absorption column 7 (a bit above atmospheric pressure) to be brought in contact with an amine absorption medium to absorb carbon dioxide from the flue gas. The flue gas enters the absorption column 7 in its lower section and the amine enters the column on top of a packing. The flue gas flows through the packing and is thus brought in contact in a countercurrent way with the amine. The packing increases the mass transfers between flue gas and absorption medium. A CO2-depleted flue gas is discharged from the top of the absorption column 7 to the atmosphere (Flue gas to atmosphere). The carbon dioxide laden absorption medium (into which carbon dioxide was absorbed) exits from the bottom of the absorption column 7 and is sent by a pump 8 for regeneration.

The carbon dioxide laden absorption medium enters a desorption column 11 on top of a packing and flows down through the packing to the bottom of the desorption column 11. The absorption medium is recirculated through a reboiler 14 for being heated and the heated absorption medium is sent back to the desorption column 11. This enables thermal desorption of the carbon dioxide from the absorption medium. The packing increases the mass transfers for improved desorption of the carbon dioxide. In the embodiment of figure 3, heat is brought to the reboiler 14 by LP-steam generated at the flue gas boiler 1. The absorption medium enters an absorption medium circulation section of the reboiler 14. LP-steam enters a heating medium circulation section of the reboiler 14, steam condensation heat is transferred to the absorption medium circulation section and an LP-condensate exits heating medium circulation section for being returned to the fluid gas boiler 1. This is merely an exemplary embodiment, and LP steam may as well be generated by the cracked gas boiler, or by a combination of cracked gas and flue gas boiler 1. The regenerated absorption medium (depleted in carbon dioxide) exits from the bottom of the desorption column 11 and is recycled back to the absorption column 7 by a pump 10.

The carbon gas mix released from the absorption medium exits from the top of the desorption column 11 and cooled in a heat exchanger 12 for the condensation of traces of amines remaining in said gas mix. The condensates are separated in a separation vessel 15 and recycled to the desorption column 11 through a pump 13. A carbon dioxide enriched gas exits from the top of the separation vessel 15 and may be thereafter sent to further purification and liquefaction.

A heat exchanger 9 is arranged for the transfer of heat from the hot regenerated absorption medium discharged from the desorption column 11 to the carbon dioxide laden absorption medium being sent to the desorption column 11. This reduces the amount of heat provided to the desorption column 11 through the reboiler 14.

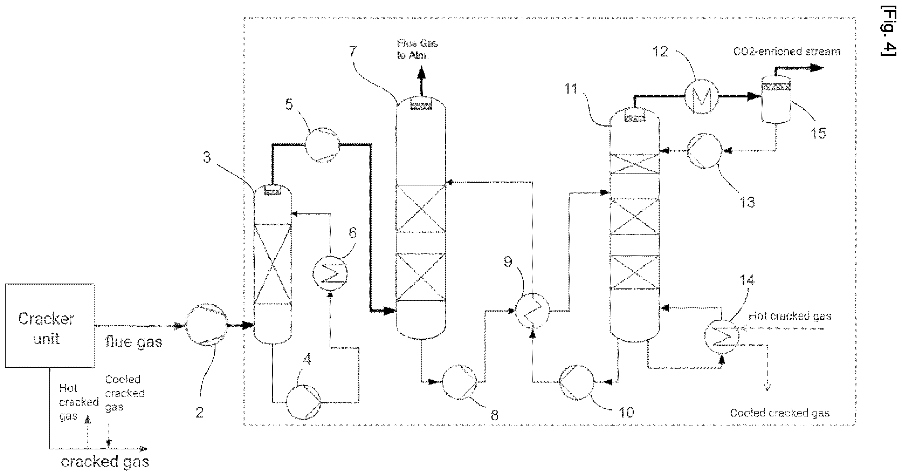

The embodiment of figure 4 differs from the embodiment of figure 3 in that the heat is brought to the reboiler 14 by the hot cracked gas discharged from the cracker unit. A cooled cracked gas exits the heating medium circulation section of the reboiler 14 for being for instance returned to the cracked gas boiler, or directly to a scrubbing unit if the reboiler 14 has provided enough cooling of the cracked gas.

The embodiment of figure 4 differs from the embodiment of figure 3 and 4 in that the heat is brought to the reboiler 14 by the hot flue gas discharged from the cracker unit. A cooled flue gas exits the heating medium circulation section of the reboiler 14 and is returned to the compressor 2.

These are merely exemplary embodiments, and heat may be brought to the reboiler 14 by any combination of LP steam, cracked gas and flue gas.

## Claims

1. Process of ammonia cracking, comprising the following steps :
- providing an ammonia feed stream,
- passing at least part of the ammonia feed stream, or a gas derived from the ammonia feed stream, to a cracker unit for performing an ammonia cracking reaction,
- providing a primary fuel and performing a combustion of said primary fuel thus generating heat and a flue gas comprising carbon dioxide,
- providing heat from said combustion to the ammonia cracking reaction,
- passing at least a portion of the flue gas to a carbon dioxide recovery unit for recovering a carbon dioxide enriched stream from the flue gas,
wherein a cracked gas comprising hydrogen, nitrogen and optionally unconverted ammonia is obtained through the ammonia cracking reaction.

2. Process according to the preceding claim, said process being for the production of a renewable fuel, in particular a renewable fuel of non-biological origin, and said portion of the flue gas passed to the carbon dioxide recovery unit is controlled such that the carbon intensity of the produced renewable fuel remains below a pre-determined value.

3. Process according to one of the preceding claims, wherein said primary fuel is a hydrocarbon containing fuel, such as natural gas, methane or bio-methane, LPG or refinery offgas.

4. Process according to one of the preceding claims, wherein passing at least part of the flue gas to a carbon dioxide recovery unit comprises absorbing carbon dioxide from the flue gas by means of an absorption medium, thus obtaining a carbon dioxide laden absorption medium.

5. Process according to the previous claim, wherein the absorption medium comprises an amine.

6. Process according to claim 4, wherein the absorption medium comprises ammonia derived from the provided ammonia feed stream.

7. Process according to one of claims 4 to 6, comprising passing the carbon dioxide laden absorption medium to a desorption unit for desorbing carbon dioxide from the carbon dioxide laden absorption medium thus obtaining a regenerated absorption medium.

8. Process according to the previous claim, comprising a step of generating steam by cooling the cracked gas, process wherein carbon dioxide is thermally desorbed from the carbon dioxide laden absorption medium by heating said carbon dioxide laden absorption medium by heat exchange with said generated steam.

9. Process according to claim 7 or claim 8, wherein carbon dioxide is thermally desorbed from the carbon dioxide laden absorption medium by heating said carbon dioxide laden absorption medium by heat exchange with the cracked gas.

10. Process according to one of the previous claims, wherein said ammonia feed stream is provided in a liquid form and vaporized and the recovered carbon dioxide enriched stream is liquefied by heat exchange with at least part of the ammonia feed stream provided in a liquid form.

11. Process according to one of claims 1 to 3 or according to claim 10, wherein passing at least part of the flue gas to a carbon dioxide recovery unit comprises recovering said carbon dioxide enriched stream by cryogenics, or by adsorption, or by a combination thereof.

12. Process according to one of the previous claims, comprising recovering a hydrogen enriched stream from the cracked gas or from a gas derived therefrom, thus producing an off gas comprising hydrogen and nitrogen, the process comprising recycling the off gas, or a gas derived from the off gas, as a secondary fuel to the combustion.

13. Apparatus comprising a cracker unit, said cracker unit comprising :
- a reaction section (18) configured for performing an ammonia cracking reaction,
- a combustion chamber (19) arranged in thermal communication with the reaction section for performing a combustion and provide heat to the ammonia cracking reaction,
the apparatus comprising a carbon dioxide recovery unit and a flue gas conduit connecting the combustion chamber (19) to the carbon dioxide recovery unit for passing a flue gas discharged from the combustion chamber (19) to the carbon dioxide recovery unit and recover a CO2-enriched stream from the flue gas.

14. Apparatus according to the previous claim, wherein the carbon dioxide recovery unit is an amine based carbon dioxide recovery unit.

15. Apparatus according to the previous claim, comprising a cracked gas outlet arranged for discharging a cracked gas from the reaction section (18), wherein the carbon dioxide recovery unit comprises a desorption unit arranged for desorbing carbon dioxide from an absorption medium laden in the absorbed carbon dioxide, the desorption unit comprising a reboiler (14) configured for thermally desorbing carbon dioxide from the absorption medium, wherein the apparatus comprises a conduit fluidically connecting the cracked gas outlet to the reboiler (14).
